# EUROPEAN PATENT APPLICATION

(11) **EP 4 721 855 A1**
(43) Date of publication of application: **08.04.2026**
(21) Application number: 24204919.5
(22) Date of filing: 07.10.2024
(51) Int. Cl.: B01J 20/22, B01J 20/28, B01J 20/30, B01D 53/02, B01D 39/00

(54) **POLYMERIC FIBER COMPOSITES COMPRISING METAL-ORGANIC FRAMEWORKS AND USE THEREOF**

(30) Priority: 02.10.2024 PT 2024119736
(71) Applicant: Techzero Buildings, S.A., 4470-177 Maia (PT)
(72) Inventor: SILVA FERNANDES, SORAIA PATRÍCIA, BRAGA (PT); SILVA SOUSA, JULIANA PATRÍCIA DA, Braga (PT); MENDONÇA SPERA, NATALIA CRISTINA DE, Braga (PT)
(74) Representative: Pereira da Cruz, Joao

(57) **Abstract**

The present disclosure relates to polymeric fibers comprising metal-organic frameworks and use thereof in CO₂ capture. The present disclosure provides a composite comprising polymer fibers comprising a matrix, wherein from 10% to 30% weight per weight (w/w) of said matrix comprises Metal-Organic Framework (MOF) particles incorporated therein, said MOF being Cu-MOF-74, NH₂-MIL-101, Co-MOF-74, or HKUST-1, said composite having a surface area (BET) from 400 to 600 m² g⁻¹. The size of MOF particles is within the nanometer-to-micrometer scale, thus retaining a high surface area and a porous structure. The MOF particles are uniformly distributed a polymeric fiber matrix within the composite material, resulting in an ideal uniform porous structure for the capture and storage of gases, such as CO₂. The present disclosure also relates to a filter and system comprising said composite, as well as a method to obtain said composite and use thereof.

## Description

### FIELD OF THE INVENTION

The present disclosure relates generally to polymeric fibers comprising metal-organic frameworks and use thereof, e.g., in CO₂ capture.

### BACKGROUND OF THE INVENTION

Currently, reducing CO₂ emissions from the atmosphere to achieve carbon neutrality is one of the world's main short-term (2030) and long-term (2050) goals. The high concentrations of CO₂ detected in the atmosphere over the last few years have been identified as the main cause of the increase in the greenhouse effect and climate change, with more extreme phenomena happening all over the world. Despite the technological efforts made over the years in terms of CO₂ capture processes, finding more efficient, and environmentally friendly technologies remains a challenge.

In public or commercial buildings, the presence of active internal ventilation systems is a problem in terms of energy efficiency and air quality. On the market the technologies are essentially focused on eliminating particles (PM₁₀, PM_{2.5}, PM₁) circulating in the air, with a shortage of technologies in terms of treating the CO₂ naturally present in indoor environments

The development of technologies involving carbon capture and storage (CCS) has emerged as an alternative to reforestation, since in addition to reducing CO₂ emissions, it is possible to reuse the CO₂ molecule, allowing its direct recovery.

The adsorption method has been widely used as a CCS technology for CO₂ capture due to its low energy consumption, ease of implementation, versatile design and low cost of operation. The adsorbent material to be used can be regenerated through a desorption process and consequently reused. Thus, there is a need for the development of new materials, particularly adsorbent materials to achieve high adsorption efficiencies, without high costs.

Patent US10744485B2 discloses MOF-derived porous carbon materials for carbon dioxide capture, more specifically comprising a method for preparing thereof and the porous carbon materials for the purpose of adsorbing CO₂.

Patent CN112691645AU discloses a carbon aerogel/metal organic framework composite material, a preparation method thereof and application thereof in gas storage.

### SUMMARY OF THE INVENTION

The present disclosure provides a composite comprising polymer fibers comprising a matrix, wherein from 10% to 30% weight per weight (w/w) of said matrix comprises Metal-Organic Framework (MOF) particles incorporated therein, said MOF being Cu-MOF-74, NH₂-MIL-101, Co-MOF-74, or HKUST-1. In a preferred embodiment of the disclosure, the MOF is HKUST-1, and said composite has a surface area from 400 to 600 m² g⁻¹, wherein the surface area is calculated by using the Brunauer Emmett Teller (BET) method.

HKUST-1 MOF has a crystalline structure, proven by Powder X-ray diffraction (PXRD), in which the crystalline structure has an organized chemical structure and more accessible pores for gas capture, such as carbon dioxide (CO₂).

The MOF particles comprise metal-organic framework (MOF) materials aggregates, ranging from the nanometer scale to the micrometer scale and retain the properties of the MOF material, such having a porous structure and high surface area. In addition, the MOF particles are uniformly distributed in the polymeric fiber matrix, which in turn allow the composite material to have a uniform porous structure.

In an advantageous aspect of the present disclosure, the uniform porous structure and high surface area of the composite allows the composite material to have a high adsorption performance to successfully capture gas such as CO₂.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the invention will become apparent to those skilled in the art from this detailed description.

### BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.
Figure 1 is a graph presenting X-ray diffraction (XRD) pattern of HKUST-1 MOF (top) and PAN@HKUST-1 fibers (bottom);
Figure 2 is a graph presenting isotherms of adsorption (filled circles) and desorption (hollow circles) of nitrogen measured at -196 °C of PAN@HKUST-1 fibers and HKUST-1 MOF;
Figure 3 is a graph presenting data from thermogravimetric analysis (TGA) of PAN@HKUST-1 fibers and HKUST-1 MOF.
Figures 4 is a graph presenting data from infrared spectroscopy data of PAN@HKUST-1 fibers and HKUST-1 MOF.
Figures 5A-B are SEM images of HKUST-1 MOF (Figure 5A) and PAN@HKUST-1 fibers (Figure 5B);
Figure 6 is a graph presenting CO₂ adsorption efficiency (%) by MOF HKUST-1 as a function of time, obtained from the adsorption test. Experiment carried out in a column adsorption unit, at room temperature (≈ 21°C) and atmospheric pressure ([CO₂] ≈ 1000 ppm);
Figure 7 is a graph presenting CO₂ adsorption efficiency (%) by PAN@HKUST-1 fibers as a function of time, obtained from the adsorption test. Experiment carried out in a column adsorption unit, at room temperature (≈ 21°C) and atmospheric pressure ([CO₂] ≈ 1000 ppm).

### DETAILED DESCRIPTION OF THE INVENTION

According to some embodiments, the present disclosure provides a composite comprising polymeric fibers comprising a matrix, wherein the matrix comprises Metal-Organic Framework (MOF) particles incorporated therein.

According to the present disclosure, MOF particles are embedded (incorporated) into the polymeric fibers, around the fibers as well as inside the fibers.

According to some embodiments, the present disclosure provides a composite comprising polymeric fibers comprising a matrix, wherein from 10% to 30% weight per weight (w/w) of the matrix comprises Metal-Organic Framework (MOF) particles incorporated therein. In some embodiments, the MOF is Cu-MOF-74, NH₂-MIL-101, Co-MOF-74, or HKUST-1.

In some embodiments, the MOF is HKUST-1. The present disclosure is based, in part, on the finding that HKUST-1 MOF has a crystalline structure, proven by PXRD. HKUST-1 MOF with crystalline structure has described herein has an organized chemical structure, and more accessible pores for gas (such as CO₂) capture.

As used herein, "MOF particles" refers to discrete units or aggregates of metal-organic framework materials with nanoscale to micrometer-scale dimensions, that retain the characteristics of the MOF material such as porous structure and high surface area of MOFs. In a relevant aspect of the present disclosure, the amount of MOF particles being set between 10% and 30% (w/w) allows the matrix to be prepared by electrospinning, in which the polymeric fiber mixture maintains the viscosity and conductivity conditions that enable the polymeric fiber mixture to be spun. In addition, increasing the amount of MOF particles above 30% (w/w) would compromise the viscosity and conductivity of the mixture which would prevent a proper preparation of the matrix by electrospinning. Preferably, the matrix comprises 25% (w/w) of MOF particles.

In some embodiments, MOF particles have a particle size from 100 to 200 µm. In some embodiments, the MOF particles are uniformly distributed in the polymeric fiber matrix. The present disclosure is based, in part, on the finding that a polymer fiber comprising a matrix as described herein, comprises porous structure with a uniform distribution of pores. This leads to a composite material with a uniform structure. According to the present disclosure, a composite as described herein has a BET surface area from 400 to 600 m² g⁻¹. The present disclosure is based, in part, on the finding that a composite material as described herein having a BET surface area from 400 to 600 m² g⁻¹ has a superior adsorption performance.

As used herein the term "polymer" according to the present disclosure refers to a large molecule composed of repeating structural units, known as monomers, covalently bonded together to form a long-chain or network-like structure. The term "polymer" includes natural polymers and synthetic polymers. Polymer fibers are long, thread-like structures made from synthetic or natural polymers that are spun or extruded into filaments with high aspect ratios (length-to-diameter ratios).

In some embodiments, a polymer according to the present disclosure includes any polymer with affinity for carbon dioxide (CO₂) and capacity for CO₂ absorption. As used herein the term "polymer with CO₂ affinity" refers to any polymer material that exhibits an affinity or interaction with carbon dioxide (CO₂) molecules. These polymers comprise polymers able to selectively capture or adsorb CO₂ from gas mixtures.

Non-limiting examples of suitable polymers according to the present disclosure include polyvinyl alcohol (PVA), polyacrylonitrile (PAN), polyethylenimine (PEI), polyurethane (PU), polystyrene (PS), polylactic acid (PLA), polyvinylpyrrolidone (PVP), polyacrylamide (PAM), polyethylene oxide (PEO), or any combination thereof. In some embodiments, the polymer comprises PAN. In some embodiments, the polymer consists of PAN.

In some embodiments, a composite as described herein is for capturing a gas, filtering a gas, storing a gas, or a combination thereof. In some embodiments, the gas comprises CO₂, N₂, methane, hydrogen, VOCs, NOx, water vapor, or any combination thereof. In some embodiments, the gas is a gas mixture comprising CO₂.

In some embodiments, a composite as described herein is for selectively capturing a gas, filtering a gas, storing a gas, or a combination thereof from a gas mixture. In some embodiments, the gas is CO₂.

In some embodiments, the composite has a gas adsorption capacity of at least 15%. In some embodiments, the composite has a gas adsorption capacity of at least 40%. In some embodiments, the composite has a gas adsorption capacity of at least 50%. The present disclosure is based, in part, on the finding that a gas adsorption capacity of a composite as described herein is maximized in an environment with controlled temperature (20 - 30 °C), controlled humidity (20 - 40%), or both.

In some embodiments, the composite has a thermal stability from 200 to 400 °C. The present disclosure is based, in part, on the finding that a composite material as described herein having a thermal stability from 200 to 400 °C is thermally stable, maintaining its physical and chemical properties during an adsorption process.

In some embodiments, the composite has a pore size from 0.8 to 2 nm. The present disclosure is based, in part, on the finding that a microporous composite material as described herein having a pore size from 0.8 to 2 nm, is selective for the adsorption of particular molecules. In some embodiments, the composite material having a pore size from 0.8 to 2 nm presents selectivity to CO₂ molecules (having a size of about 0.33 nm).

The present disclosure is based in part, on the finding that a composite material as described herein having a pore size from 0.8 to 2 nm has a superior (increased) selectivity compared to a similar composite with higher pore sizes.

In some embodiments, the composite has a pore volume from 0.1 to 0.3 cm³ g⁻¹.

In some embodiments, the MOF is HKUST-1 with a surface area (BET) from 1300 to 1600 m² g⁻¹, a pore volume from 0.4 to 0.8 cm³ g⁻¹, a pore size from 0.5 to 0.7 nm, or any combination thereof.

According to some embodiments, the present disclosure provides a filter comprising a composite as described hereinabove.

In some embodiments, the filter comprises a composite as described hereinabove and a material selected from: activated carbon, ammonia-treated activated carbon, a zeolite, a polymer, silica gel an ionic liquid, or any combination thereof.

According to the present disclosure, the filter is incorporated into a framework such as a metal framework or any other suitable rigid filter framework. According to the present disclosure, the choice of material of the framework varies depending on the desired application. Suitable materials include metal (such as aluminum, stainless or galvanized steel), plastic (PVC, PET, PP) or other rigid materials. In some embodiments, the filter framework is a metallic filter framework. In an advantageous aspect of the present disclosure, the metallic filter framework allows the proper retention of the polymeric fibers contained in the filter, to prevent the displacement of such polymeric fibers under high air flow conditions passing through the filter.

In some embodiments, the framework comprises at least 2, at least 5, or at least 6 grid layers, including any value therebetween. Each possibility represents a separate embodiment of the present disclosure. In some embodiments, the layers are stacked layers. In some embodiments, the composite is placed between at least 2 grid layers. In some embodiments, the composite is placed between each 2 grid layers. In an advantageous aspect of the present invention, the number of grid layers and the stacking order of grid layers and composite material allows the tuning of the overall absorption capacity of the filter.

In some embodiments, the filter has a length from 20 cm to 80 cm, a width from 20 cm to 80 cm and a thickness from 1 cm to 4 cm. According to the present disclosure, a filter as described herein is suitable for direct incorporation in systems. A system according to the present disclosure refers to any system that is a source of gas emissions. Such systems are well known in the art and will become apparent to those skilled in the art. In some embodiments, the gas comprises CO₂. In some embodiments, the system is a ventilation system. Non-limiting examples of ventilation systems according to the present disclosure include: natural ventilation systems, exhaust ventilation, supply ventilation, heat recovery ventilators, and energy recovery ventilators.

Ventilation systems according to the present disclosure include ventilation systems used in buildings, vehicles (such as cars, buses, trains, airplanes, and ships), underground and enclosed spaces (such as mines, tunnels, and underground parking garages, storage facilities, warehouses, and industrial plants), Greenhouses and agricultural settings (such as livestock barns and poultry house), industrial facilities (manufacturing plants, refineries, chemical processing plants, and warehouses), mining operations, specialized environments (such as laboratories, cleanrooms, hospitals, and data centers).

According to some embodiments, the present disclosure provides a system comprising a filter as described hereinabove. In some embodiments, the system is a ventilation system.

In some embodiments, the system further comprises at least one sensor. In some embodiments, the sensor is a gas detection sensor. In some embodiments, the sensor is a CO₂ detection sensor.

According to some embodiments, the present disclosure provides a method for obtaining a composite as described herein, the method comprising: a) contacting from 10% to 30%(w/w) of a MOF with an organic solvent, thereby forming a suspension; b) adding from 5% to 20% (w/w) of a polymer, to the suspension thereby forming a mixture; and c) electrospinning the mixture. In an advantageous aspect of the present disclosure, the spun composite fibers are deposited on a surface forming a fluffy cotton-like texture that allows the passage of air or other gases. The spun composite fibers may then be collected and applied in a filter, as described above.

In some embodiments, the solvent comprises ethanol, DMF, or both. In some embodiments, the solvent is DMF. In some embodiments, the polymer is PAN.

The present disclosure is based, in part, on the finding that the amount of MOF and PAN as disclosed herein leads to a mixture with the desired properties to be able to achieve a suspension that can be used in electrospinning. The present disclosure is based, in part, on the finding that using a higher amount of MOF, PAN or both, doesn't allow for a suspension to be formed that can be used in electrospinning.

According to some embodiments, the present disclosure provides a use of the composite as described hereinabove in gas adsorption, gas separation, gas storage, catalysis, sensing, filtration, drug delivery, drug-controlled release, energy storage, environmental remediation, sensors, hydrogen energy, or any combination thereof. In some embodiments, the gas is as described hereinabove. In some embodiments, the gas comprises CO₂. In some embodiments, the gas consists of CO₂.

According to some embodiments, the present disclosure provides a use of the filter as described herein above in gas adsorption, gas separation, gas storage, catalysis, sensing, filtration, drug delivery, drug-controlled release, energy storage, environmental remediation, sensors, hydrogen energy, or any combination thereof. In some embodiments, the gas is as described hereinabove. In some embodiments, the gas comprises CO₂. In some embodiments, the gas consists of CO₂.

As used herein the term "about" refers to ± 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure.

Various embodiments and aspects of the present disclosure as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### Materials and methods

### HKUST-1 MOF Synthesis

The synthesis of HKUST-1 MOF, reported in the literature, was explored due to its high surface area (1326 m² g⁻¹) as well as considerable selectivity for the CO₂ molecule. Computational evidence has shown that the presence of unsaturated copper atoms in the MOF structure provides additional connection points for CO₂ molecules, with high selectivity for their passage through the pores.

Thus, the synthesis of this material was efficiently achieved through the formation of a suspension of copper nitrate trihydrate (72.4 mmol) and 1,3,5-benzenetricarboxylic acid (39.97 mmol) in ethanol (500 mL). The mixture was sonicated until a homogeneous blue suspension was obtained and then placed under magnetic stirring at 300 rpm and reflux for 24 h at 100 °C. Then, the light blue solid obtained was collected by filtration and washed with distilled water and ethanol. Finally, HKUST-1 MOF (5 g) was dried in a vacuum oven at 100 °C.

Synthesis of HKUST-1 MOF has also been successfully achieved at a scale greater than 10 g.

### Synthesis of PAN@HKUST-1 fibers

The electrospinning polymeric mixture was prepared following the next steps: (1) 3.7 g of HKUST-1 MOF were dispersed in 10 mL of DMF; (2) 1.7 g of polyacrylonitrile (PAN) was added at the previous dispersion and, the mixture was heated at 60 °C for 4 h.

The prepared polymeric suspension was transferred to a 20 mL syringe and connected to a metallic needle (d = 1.5 mm), which was incorporated into the NanoNC ESR200R2 electrospinning system. The electrospinning system was configured in the vertical position and an electrical charge of 21 kV was applied, with a flow rate of 2 mL h⁻¹. At a distance of 20 cm, a 400 mm flat collector made of steel, coated with aluminum foil, was placed and used to collect the PAN@HKUST-1 fibers. The PAN@HKUST-1 fibers were dried in a vacuum oven at 100 °C for 12 hours.

### X-Ray Diffraction (XRD)

The crystalline phase of the prepared material was determined by X-ray diffraction analysis (PAN Analytic in operational mode at 45Kv and 40mA).

### Thermogravimetric analysis

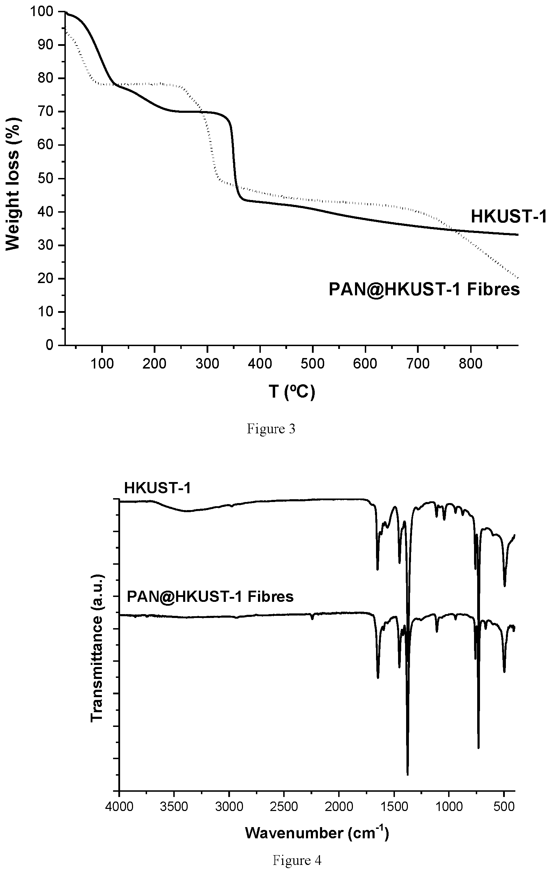

To determine the amount of organic and inorganic matter present in the prepared MOF, a thermogravimetric analysis was performed (TGA/DSC 1 STAR^{e} Mettler-Toledo) (Figure 3). The sample was heated to 900 °C under a continuous flow of argon (70 mL min⁻¹) with a heating rate of 15 °C min⁻¹. Then, the sample was maintained at 900 °C for 7 min under an argon flow of 70 mL min⁻¹; and for another 13 min under air flow at 70 mL min⁻¹.

### Nitrogen adsorption-desorption isotherms at -196°C

Nitrogen adsorption-desorption isotherms at -196 °C were performed using the Quantachrome Autosorb IQ2 automated analyzer. Prior to analysis, samples were outgassed by heating to 120 °C (heating rate: 5 °C min⁻¹, analysis time: 720 min). The surface area of the material was calculated by using the Brunauer Emmett Teller (BET) method. Pore size distribution was assessed using Barrett-Joyner-Halenda (BJH) method.

### Infrared Spectroscopy

Infrared spectra were recorded on a Bruker VERTEX 80v FT-IR spectrometer in attenuated total reflectance (ATR) mode. IR data was background corrected and reported in frequency of adsorption (cm⁻¹).

### Scanning Electron Microscopy (SEM)

Material morphology was evaluated using a Quanta 650 field-emission scanning electron microscope, operating at 5 kV and incorporating an Everhardt Thornley secondary electrons detector, with a working distance of around 10 mm. The samples were prepared by adhesion of the sample directly on a conductive double-sided copper tape attached to SEM pin stub.

### X-Ray Photoelectron Spectroscopy (XPS)

The X-ray photoelectron spectroscopy (XPS) study was performed under high vacuum conditions using Thermo Fisher Scientific ESCALAB250Xi equipment. The spectra were acquired with a hemispherical analyzer and a monochromatic X-ray source (Al Kα radiation, hv = 1486.6 eV) operated at 15 keV and 200 W. Spectrum peaks were adjusted with the help of Thermo Avantage Data Processing software.

### Inductively coupled plasma-optical emission spectroscopy (ICP-OES)

The copper content was determined by ICP-OES carried out on an ICPE-9000 multitype ICP emission spectrometer from Shimadzu, equipped with a nebulizing system, and using optical emission spectroscopy for detection. Samples were digested by dispersing HKUST-1 MOF or PAN@HKUST-1 fibers in aqua regia, at 140 °C, for 12h to completely decompose the sample.

### EXAMPLE 1

### SYNTHESIS OF HKUST-1 MOF

HKUST-1 MOF was synthesized as a powder, following a simple and effective sol-gel method.

The crystallinity of the synthesized HKUST-1 MOF was demonstrated by XRD, through the appearance of a crystallographic pattern with characteristic diffraction peaks at 20 = 9.5, 11.6, 13.4, 19, 25.9 and 29.4°, which correspond to the (220), (222), (400), (120), (220) and, (240) planes of the crystal structure of MOF HKUST-1.

The X-ray photoelectron spectroscopy (XPS) assay was performed, revealing the presence of three main peaks at 285 eV, 532 eV and, 955 eV, respectively indicating the presence of carbon (C), oxygen (O) and, copper (Cu) into the HKUST-1 MOF structure.

Nitrogen sorption measurements at -196 °C, showed the presence of a type I isotherm, typical of microporous materials. A surface area value of 1576 m² g⁻¹ was calculated by the BET method.

A total pore volume in the order of 0.69 cm³ g⁻¹ was calculated at P/P₀ of 0.95, and a micropores volume in the order of 0.55 cm³ g⁻¹ was determined by t-method.

A pore size distribution in the range of 0.5 and 0.7 nm was determined by DFT method.

HKUST-1 MOF has high thermal stability as demonstrated by the TGA analysis with a copper metal content in the order of 34%.

By infrared spectroscopy, the presence of typical bands of high intensity at 3390, 1649, 1375, 729 and, 490 cm⁻¹ were observed. The peak at 3390 cm⁻¹ corresponds to the hydroxyl groups (-OH) of residual water that coordinates with copper metal of HKUST-1 MOF. The peak at 1649 cm⁻¹ is attributed to the vibration of the C=O bond of the deprotonated unit of the 1,3,5-benzenetricarboxylic acid molecule. The peaks at 1375 and 729 cm⁻¹ are attributed to the vibration of the C=C bond and the carboxylate ion, respectively. The peak at 490 cm⁻¹ is attributed to the vibration of the Cu-O bond.

Through SEM analysis, the morphology of the HKUST-1 MOF was observed, with clear evidence of its irregular shape.

In accordance with ICP results, a content of 151 mg Cu g⁻¹ MOF was determined.

### EXAMPLE 2

### SYNTHESIS OF PAN@HKUST- FIBERS

The electrospinning technique is a versatile method for manufacturing polymeric fibers.

By using electrospinning technique, it was possible incorporate the MOF material in polymeric fibers. PAN was selected as polymer due to its high thermal conductivity, mechanical and chemical resistance, excellent thermal stability and low cost.

The polymeric suspension of HKUST-1 MOF and PAN in DMF was prepared. Then, through the electrospinning technique PAN@HKUST-1 fibers were obtained.

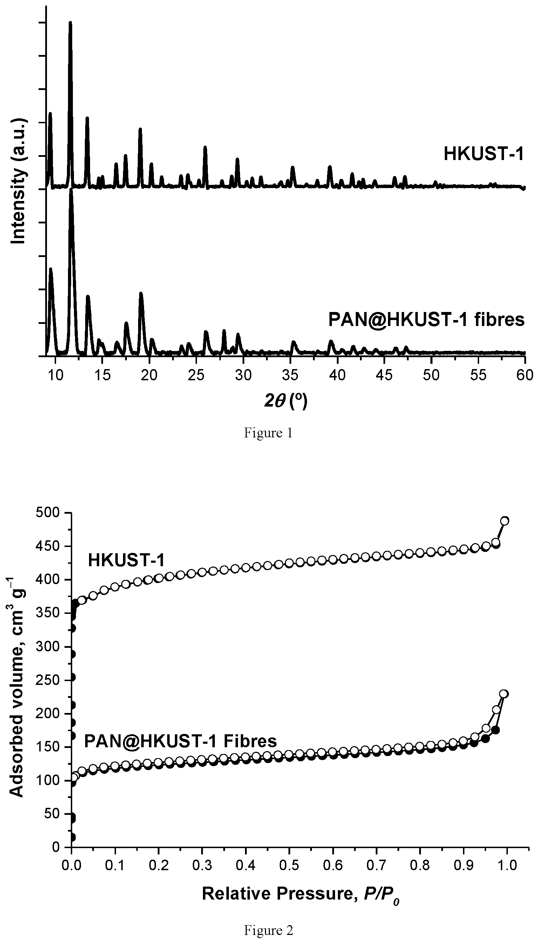

The PAN@HKUST-1 fibers were characterized by XRD analysis (Figure 1), and the presence of a crystallographic pattern comprising diffraction peaks typical of MOF HKUST-1 (20 = 9.5, 11.7, 13.5, 19.1, 26.0 and 29.5°) were observed, indicating the correct incorporation of HKUST-1 MOF in the fibers.

Through nitrogen sorption measurements at -196 °C of the PAN@HKUST-1 fibers (Figure 2), a reduction in the surface area of the PAN@HKUST-1 fibers of around 68% was observed (*S*_{BET} = 500 m² g⁻¹), when compared to the surface area recorded for HKUST-1 MOF (*S*_{BET} = 1576 m² g⁻¹).

A total pore volume of around 0.25 cm³ g⁻¹ was calculated at P/P₀ of 0.95.

A pore size of around 1.1 nm was determined by BJH method, highlighting the microporous character of the PAN@HKUST-1 fibers.

PAN@HKUST-1 fibers show high thermal stability (Figure 3), in agreement with the results obtained for the HKUST-1 MOF.

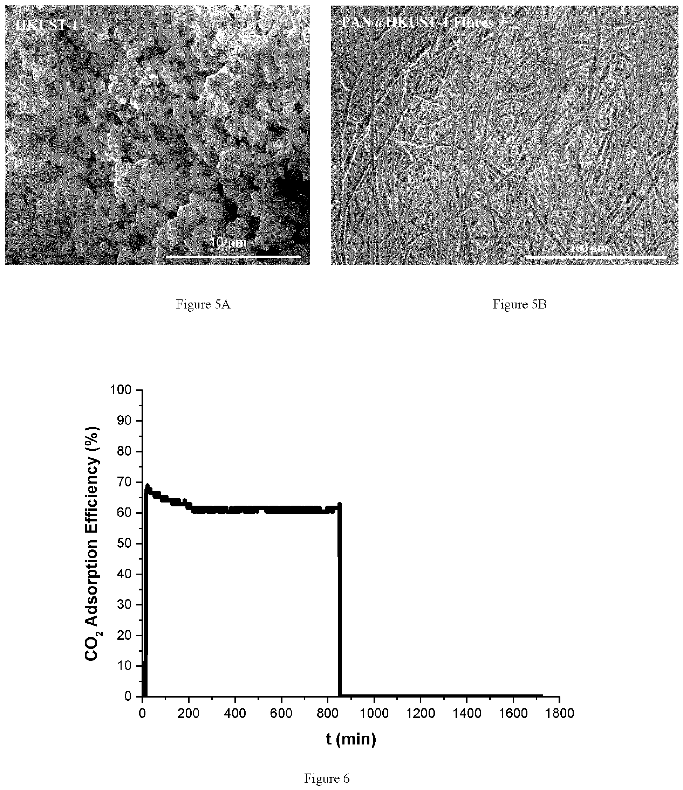

Through SEM analysis (Figures 5A-B), the PAN@HKUST-1 fibers are randomly oriented, with the formation of beads along their structure.

By infrared spectroscopy (Figure 4), the presence of the typical bands of HKUST-1 MOF at 1647, 1377 and 730 cm⁻¹ was observed. The additional peak observed at 2240 cm⁻¹ corresponds to the nitrile groups (-C=N) present in the PAN polymer that constitute the PAN@HKUST-1 fibers.

In accordance with ICP results, a content of 36 wt% of HKUST-1 MOF in fibers was determined.

Thus, the synthesis of PAN@HKUST-1 fibers was successfully achieved, leading to the formation of a high-quality composite with the potential to be used in adsorption applications.

### EXAMPLE 3

### CO₂ CAPTURE STUDIES

For preliminary CO₂ adsorption studies on a laboratory scale, a fixed-bed adsorption column reactor was used.

In order to evaluate the performance of MOF HKUST-1 to capture CO₂, adsorption tests were performed using a quartz glass tube (300mm, ∅ext 9 mm, ∅int 8 mm) as fixed-bed reactor. HKUST-1 (≈ 0.6 g) was first purged with argon (50 mL min⁻¹) at 100 °C and atmospheric pressure, for 3 hours. Then, HKUST-1 was incorporated into the adsorption column and exposed to a continuous flow of CO₂ (100 mL min⁻¹, [CO₂] = 1000 ppm). After exposing the material to CO₂ atmosphere, at room temperature (≈ 21 °C) and atmospheric pressure, the adsorption time count starts and all intensity values in mA are collected every 30 seconds by a datalogger (model RTR505BL, T&D).

An adsorption efficiency of 60% was registered for 14 h, followed by a saturation of the MOF material (Figure 6). A CO₂ adsorption capacity, q (g g⁻¹), of 76.64 g CO₂ g⁻¹ HKUST-1 MOF was experimentally determined.

Taking into account the results obtained, it is possible to assess the ability of MOF HKUST-1 to be used as an efficient adsorbent for CO₂ capture.

Following the same conditions reported above for the CO₂ adsorption studies on a laboratory scale of HKUST-1 MOF, the efficiency of PAN@HKUST-1 fibers was also evaluated.

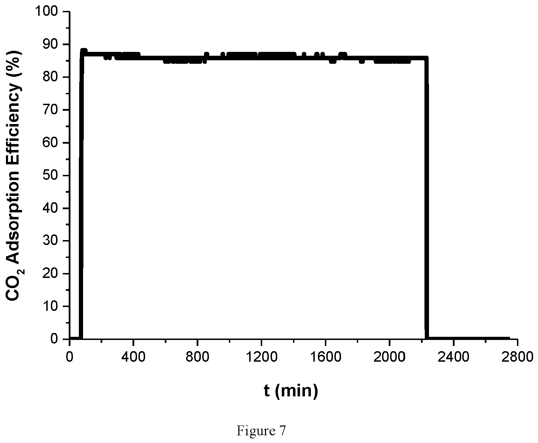

An adsorption efficiency of 85% was registered for 36 h, followed by a saturation of the PAN@HKUST-1 fibers (Figure 7). A CO₂ adsorption capacity, q (g g⁻¹), of 299.90 g CO₂ g⁻¹ PAN@HKUST-1 fibers was experimentally determined.

Comparing to the adsorption capacity of HKUST-1 MOF (76.5764 g g⁻¹), its immobilization as PAN@HKUST-1 fibers increased the CO₂ adsorption capacity by up to 3 times (299.90 g g⁻¹), highlighting the effectiveness of the immobilization process.

### EXAMPLE 4

### INCORPORATION OF PAN@HKUST-1 FIBERS IN AN EXTRACTION/ VENTILATION SYSTEM

After the evaluation of the CO₂ adsorption capacity of HKUST-1 MOF e PAN@HKUST-1 fibers on a laboratory scale, full-scale tests on the ventilation/exhaustion systems of a shopping mall were performed. The indoor air quality of the mall revealed the presence of a CO₂ value in the range of 480-720 ppmV (Table 1).

**Table 1. Air quality parameters evaluated in the shopping mall area**

| Sampling Zone | Evaluated Parameters | | | | | | |
|---|---|---|---|---|---|---|---|
| | **PM_{2.5} (µg/m³)** | **PM₁₀ (µg/m³)** | **CO₂ (ppmV**) | **CO (ppmV)** | **VOC (µg/m³)** | **Bacteria (cfu/m³)** | **Fungi (cfu/m³)** |
| shopping mall | 6-22 | 14-40 | 480-720 | 0.0 | 200-350 | 112-300 | 96-295 |

### PAN@HKUST-1 fibers were added to a metallic filter system (30 x 30 x 2.5 cm)

The metallic filter is composed of internal metallic grids. The PAN@HKUST-1 fibers were placed in the middle of the metallic filter system, using metallic grids as a support for the embedded fibers.

The filter system was installed at the exit of UTA0102 (Ocram) with air coming from the mall and, with a direct connection to the outside environment. A sensor system for CO₂ detection was incorporated before and after the filter, in order to evaluate in real time, the adsorption capacity of the material.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. Composite comprising polymer fibers comprising a matrix, wherein from 10% to 30% weight per weight (w/w) of said matrix comprises Metal-Organic Framework (MOF) particles incorporated therein, said MOF being Cu-MOF-74, NH₂-MIL-101, Co-MOF-74, or HKUST-1, preferably HKUST-1, and said composite having a BET surface area from 400 to 600 m² g⁻¹.

2. Composite according to the previous claim, wherein said polymer comprises polyvinyl alcohol (PVA), polyacrylonitrile (PAN), polyethylenimine (PEI), polyurethane (PU), polystyrene (PS), polylactic acid (PLA), polyvinylpyrrolidone (PVP), polyacrylamide (PAM), polyethylene oxide (PEO), or any combination thereof, preferably PAN.

3. Composite according to any none of claims 1 to 2, for capturing a gas, filtering a gas, storing a gas, or a combination thereof, wherein said gas comprises CO₂, N₂, methane, hydrogen, VOCs, NOx, water vapor, or any combination thereof, preferably CO₂.

4. Composite according to any one of claims 1 to 3, wherein said composite has a CO₂ adsorption capacity of at least 15%, preferably at least 40%, more preferably at least 50%.

5. Composite according to any one of claims 1 to 4, wherein said composite has a thermal stability from 200 to 400 °C.

6. Composite according to any one of claims 1 to 5, wherein said composite has a pore size from 0.8 to 2 nm, a pore volume from 0.1 to 0.3 cm³ g⁻¹, or both.

7. Composite according to any one of claims 1 to 6, wherein said MOF particles have a particle size from 100 to 200 µm.

8. Composite according to any one of claims 1 to 7, wherein said MOF is HKUST-1 having a surface area (BET) from 1300 to 1600 m² g⁻¹, a pore volume from 0.4 to 0.8 cm³ g⁻¹, a pore size from 0.5 to 0.7 nm, or any combination thereof.

9. Filter comprising a composite according to any one of claims 1 to 8, and optionally a material selected from: activated carbon, ammonia-treated activated carbon, a zeolite, a polymer, silica gel an ionic liquid, or any combination thereof.

10. Filter according to the previous claim, wherein said filter is incorporated into a framework, preferably a metal framework, said framework comprising at least 2 grid layers, preferably at least 5 grid layers, more preferably at least 6 grid layers, and said composite is placed between at least 2 grid layers, preferably between each 2 grid layers.

11. System, preferably a ventilation system, comprising a filter according to any one of claims 9 to 10.

12. System according to the previous claim, further comprising at least one sensor, preferably a gas detection sensor, more preferably a CO₂ detection sensor.

13. Method for obtaining a composite according to any one of claims 1 to 8, the method comprising:
a) contacting from 10% to 30%(w/w) of a MOF with an organic solvent, preferably DMF, thereby forming a suspension;
b) adding from 5% to 20% (w/w) of a polymer, preferably PAN to said suspension thereby forming a mixture; and
c) electrospinning said mixture.

14. Use of the composite according to any one of claims 1 to 8, in gas adsorption, gas separation, gas storage, catalysis, sensing, filtration, drug delivery, drug-controlled release, energy storage, environmental remediation, sensors, hydrogen energy, or any combination thereof.

15. Use of the filter according to any one of claims 9 to 10, in gas adsorption, gas separation, gas storage, catalysis, sensing, filtration, drug delivery, drug-controlled release, energy storage, environmental remediation, sensors, hydrogen energy, or any combination thereof.
